# EUROPEAN PATENT APPLICATION

(11) **EP 0 621 191 A1**
(43) Date of publication of application: **26.10.1994**
(21) Application number: 94201000.0
(22) Date of filing: 13.04.1994
(51) Int. Cl.: B65D 1/22, B29C 45/00

(54) **Method for fabricating a collapsible rectangular box and box fabricated using said method**

(30) Priority: 21.04.1993 NL 9300673
(71) Applicant: DYNOPLAST B.V., NL-6902 PB Zevenaar (NL)
(72) Inventor: Froon, Wilhelmus Johannes Maria, NL-9605 AR Zevenaar (NL); te Brinke, Henk-Jan, NL-6942 DA Didam (NL); Strien, Johannes Jan, NL-6951 MB Dieren (NL)
(74) Representative: Voncken, Bartholomeus Maria Christiaan

(57) **Abstract**

The invention relates to a method for fabricating a collapsible rectangular box with four walls interconnected by folding lines and a bottom comprising four bottom parts (9-12) each connected with a wall through a folding line, said bottom parts being grouped in two pairs (9 and 12 or 10 and 11) at least partially overlapping each other in the folded-out position of the box and each pair comprising adjoining bottom parts interconnected by a folding line (17-18). In correspondence with the invention the box is fabricated from plastics material by injection molding, wherein all folding lines comprise living hinges made of thin sections of material. In this aspect it is favourable, if the box is injection molded in a position between its completely folded-out position and its completely collapsed position. Further the invention relates to a box fabricated using the method according to the invention.

## Description

The invention relates to a method for fabricating a collapsible rectangular box with four walls interconnected by folding lines and a bottom comprising four bottom parts each connected with a wall through a folding line, said bottom parts being grouped in two pairs at least partially overlapping each other in the folded-out position of the box and each pair comprising adjoining bottom parts interconnected by a folding line. Further the invention relates to a box fabricated using said method.

In a known method for fabricating such a collapsible rectangular box a flat sheet of appropriate material, mostly cardboard, is taken as a starting point. Next a plane sheet for forming the box is cut from this flat sheet. This plane sheet generally comprises the four aligned walls and the bottom parts each connected with one of the walls. Then the first and fourth wall are foldably interconnected (for example by bonding a strip integral with one of these walls onto the other wall), whereas in a corresponding manner also the bottom parts are interconnected two by two into two pairs. Like this the box is obtained in its collapsed position. Next the box may be extended to its folded-out position of use.

It is a disadvantage of this known method for fabricating a collapsible box, that it requires a large amount of steps. The fabrication is particularly complicated by the necessity that, starting from the plane sheet, two walls and twice two bottom parts are to be interconnected through folding lines.

It is an object of the invention to provide a method of the type referred to above eliminating these disadvantages in a simple, but nevertheless effective way.

Thus the method according to the invention is characterised in that the box is fabricated from plastics material by injection molding, wherein all folding lines comprise living hinges made of thin sections of material.

The process of injection molding enables the fabrication of the walls, the bottom parts and required folding lines therebetween in one fabrication step without the need of forming connections afterwards. By an appropriate choice of the injection mold it is possible to directly shape the folding lines as living hinges, such that after being removed from the mold the box basically is directly ready for use.

According to a preferred embodiment of the method according to the invention the box is injection molded in a position between its completely folded-out position and its completely collapsed position. Injection molding the box in such a position leads to a simple injection molding process, in which the complexity of the injection mold is minimized and wherein the box basically is self-releasing from the injection mold.

Further in accordance with another embodiment of the method according to the invention it is preferred, that cooperating connection elements are provided at those locations of the bottom parts, where these overlap each other when the box is folded-out. Using these connection elements the box may be locked in the folded-out position, wherein especially connections are created between the bottom parts.

On one hand it is possible then that the connection elements are anchored in the respective bottom parts during injection molding, such that shaping these connection elements does not bring about additional fabrication steps, but on the other hand it is possible too that the connection elements are connected with the respective bottom parts after injection molding.

In this aspect it is handy when the connection elements comprise the composite parts of a "Velcro"-type connector, a push-button type connector, or alike. Such a connection may be released at choice, such that the box can be collapsed or folded out, respectively, many times.

Hereinafter the invention will be elucidated referring to the drawing, in which an embodiment is illustrated of a box fabricated using the method according to the invention.
Fig. 1 shows an embodiment of the box in a perspective view and in a position between the fully collapsed and fully folded-out position;
Fig. 2 shows the box of fig. 1, also in a perspective view, in its fully folded-out position, and
Fig. 3 shows said box in its fully collapsed position.

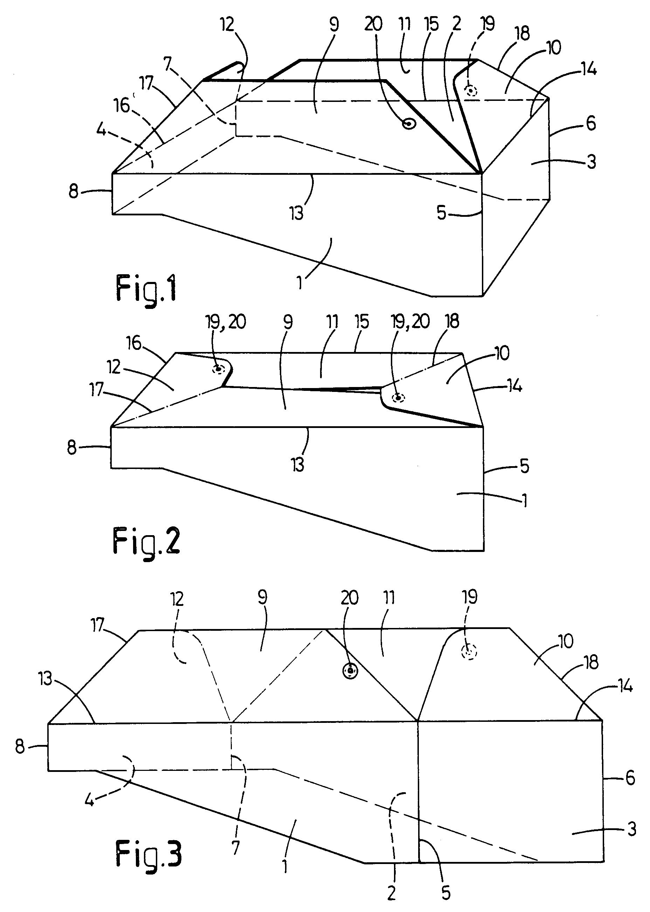

Before in detail discussing figures 1-3 it is noted, that the embodiment of the box illustrated is represented upside down, thus with its bottom facing upwards. This is done for a clearer representation of the box, especially its bottom section.

In fig. 1 a box is shown fabricated using the method according to the invention, illustrated in a position between its fully folded-out and its fully collapsed position. The embodiment of the box shown is meant for displaying objects. Thus the box comprises two oppositely positioned walls 1 and 2 each having an inclined upper edge and two walls 3 and 4 interconnecting the walls 1 and 2. The walls are interconnected by living hinges 5-8 acting as folding lines.

Bottom parts 9-12 connect to the bottom edge of each of the walls 1-4. The connections between these bottom parts 9-12 and the corresponding walls 1-4 also exist of folding lines 13-16 comprising living hinges.

Further one can see, that pairs of adjoining bottom parts 9 and 12 or 10 and 11, respectively, are interconnected by folding lines 17 and 18, respectively, comprising living hinges. Geometrically it is necessary that the folding lines 17 and 18 intersect the folding lines 13 and 16 or 14 and 15, respectively, at an angle of 45° Or in other words, the folding lines 17 and 18 are positioned in bisector planes between the walls 1 and 4 and the walls 2 and 3, respectively.

Finally fig. 1 shows at the inward side of the bottom part 10 and on the outward side of the bottom part 9 composite parts 19 and 20 of a push-button type connector or alike.

The box illustrated in fig. 1 is open at its top (in fig. 1 represented at the lower side), such that it can receive products.

Not shown in the figure are optional stacking or centering ridges, which may be useful in stacking a number of boxes.

In the position shown in fig. 1 the box can be fabricated using the method according to the invention. For this an appropriate injection molding mold is applied, in which the box may be manufactured from plastics material by injection molding. During said injection molding the folding lines 5-8 and 13-18 are shaped as living hinges made of thin sections of material. As a result of the position of the box shown in fig. 1 it is self-releasing from the injection mold (not shown), such that the box can be fabricated in one single fabrication step.

The push button parts 19 and 20 acting as connection elements between the pairs of bottom parts 9, 12 and 10, 11 may be anchored into the respective bottom parts during injection molding, or may be connected with the respective bottom parts after injection molding. It is noted that corresponding connection elements are provided at the bottom parts 11 and 12 which however are not visible in the drawing.

In fig. 2 the box is represented fully folded-out. Now one can see, that the pairs of bottom parts comprising bottom parts 9, 12 and 10, 11 partially overlap each other. At the overlapping sections the connection elements 19, 20 take care of interconnecting these pairs.

In the position shown in fig. 2 the adjoining walls 1, 3 or 3, 2 or 2, 4 or 4, 1, respectively, each define an angle of 90°. This is in contrast with the position shown in fig. 1 in which the angle between the walls 1 and 3 or 2 and 4, respectively, is larger than 90° and the angle between the walls 3 and 2 or 4 and 1, respectively, is smaller than 90°.

Finally fig. 3 illustrates the fully collapsed position of the box, in which it is completely flat. In this position the walls 1 and 3 are aligned, as are the walls 2 and 4. The walls 1 and 3 lie in pairs along the walls 2 and 4. The same applies for the bottom parts 9, 10 and 11, 12, respectively. Further one can see clearly, that the folding lines 17 and 18, which define the connections between the bottom parts 9, 12 and 10, 11, respectively, enclose an angle of 45° with the folding lines 13 and 14, respectively.

The invention is not limited to the embodiments described before, which can be varied widely within the scope of the invention as defined by the claims. The position, in which the box is fabricated during injection molding may divert from the position shown in fig. 1. Instead of a push-button like connection 19, 20 every other type of connection may be applied, such as a "Velcro"-type connection. Further it is possible, that the overlapping parts of the bottom pairs are definitively bonded together after folding out the box. In such a case the box generally is not fit for repeated use.

## Claims

1. Method for fabricating a collapsible rectangular box with four walls interconnected by folding lines and a bottom comprising four bottom parts each connected with a wall through a folding line, said bottom parts being grouped in two pairs at least partially overlapping each other in the folded-out position of the box and each pair comprising adjoining bottom parts interconnected by a folding line, **characterised**, in that the box is fabricated from plastics material by injection molding, wherein all folding lines comprise living hinges made of thin sections of material.

2. Method according to claim 1, **characterised** in that the box is injection molded in a position between its completely folded-out position and its completely collapsed position.

3. Method according to claim 1 or 2, **characterised**, in that cooperating connection elements are provided at those locations of the bottom parts, where these overlap each other when the box is folded-out.

4. Method according to claim 3, **characterised**, in that the connection elements are anchored in the respective bottom parts during injection molding.

5. Method according to claim 3, **characterised**, in that the connection elements are connected with the respective bottom parts after injection molding.

6. Method according to claim 4 or 5, **characterised**, in that the connection elements comprise the composite parts of a "Velcro"-type connector, a push-button type connector, or alike.

7. Box with four walls interconnected by folding lines and a bottom comprising four bottom parts each connected with a wall through a folding line, said bottom parts being grouped in two pairs at least partially overlapping each other in the folded-out position of the box and each pair comprising adjoining bottom parts interconnected by a folding line, **characterised**, in that the box is fabricated from plastics material by injection molding, wherein all folding lines comprise living hinges made of thin sections of material.
